# EUROPEAN PATENT APPLICATION

(11) **EP 2 472 361 A1**
(43) Date of publication of application: **04.07.2012**
(21) Application number: 11174331.6
(22) Date of filing: 18.07.2011
(51) Int. Cl.: G06F 3/038, G06F 3/033, G06F 1/26

(54) **Wireless mouse and charging system using the same**

(30) Priority: 29.12.2010 TW 099146632
(71) Applicant: Giga-Byte Technology Co., Ltd., Hsin Tien 231, Taipei County (TW)
(72) Inventor: Chen, Shu-I, Taipei Hsin Tien 231 (TW); Lin, Yin-Yu, Taipei Hsin Tien 231 (TW)
(74) Representative: Schwerbrock, Florian

(57) **Abstract**

A wireless mouse and a charging system using the same are provided. The wireless mouse includes a main body, an intermediary unit, a battery and a wireless transmitting unit. The main body has a bottom surface. The intermediary unit includes a frame, a first connector and a second connector. The frame is connected to the bottom surface of the main body. The first and second connectors are accommodated in the frame. The battery is disposed in the main body and electrically connected to the intermediary unit. The wireless transmitting unit is disposed on one side of the intermediary unit with the intermediary unit located between the wireless transmitting unit and the main body.

## Description

### BACKGROUND OF THE INVENTION

### 1. Field of the Invention

The present invention generally relates to a wireless mouse, in particular, to a multifunction wireless mouse and a charging system using the same.

### 2. Description of Related Art

Current commercially available mice are largely categorized into wired and wireless types. A wired mouse is mostly connected to a computer through a Universal Serial Bus (USB) connector, the computer supplies electric power to the wired mouse, and then the mouse provides a pointing function or enables a user to start a program by clicking. A wireless mouse uses a wireless intermediary unit to transmit a signal to a main body of the mouse, which may omit the use of a cable of a USB connector, and as wireless signals can be transmitted over a long distance, the distance between the main body of the mouse and a computer is not limited by the length of the cable.

However, the mouse can only fulfill a single purpose of providing the pointing function. Therefore, researchers are trying to provide a mouse with more diversified functions.

### SUMMARY OF THE INVENTION

Accordingly, the present invention is directed to a multifunction wireless mouse.

The present invention is also directed to a charging system, which can charge an electronic device through the multifunction wireless mouse.

The present invention provides a wireless mouse, which includes a main body, an intermediary unit, a battery and a wireless transmitting unit. The main body has a bottom surface. The intermediary unit includes a frame, a first connector and a second connector. The frame is connected to the bottom surface of the main body. The first and second connectors are accommodated in the frame. The battery is disposed in the main body and electrically connected to the intermediary unit. The wireless transmitting unit is disposed on one side the intermediary unit with the intermediary unit located between the wireless transmitting unit and the main body.

In an embodiment of the wireless mouse of the present invention, the frame of the intermediary unit further includes two accommodating grooves, and the first connector and the second connector are respectively accommodated in the accommodating grooves.

In an embodiment of the wireless mouse of the present invention, one end of the wireless transmitting unit is a third connector.

The present invention further provides a charging system, which includes an electronic device and the wireless mouse described above. The wireless mouse is electrically connected to the electronic device. The first connector of the intermediary unit is connected to the electronic device, so that electric power of the battery is transmitted to the electronic device through the intermediary unit.

In an embodiment of the charging system of the present invention, the electronic device is a hand-held electronic device.

In an embodiment of the charging system of the present invention, the charging system further includes a second electronic device, and the second connector of the intermediary unit of the wireless mouse is connected to the second electronic device.

Based on the above, the wireless mouse of the present invention can be used as an ordinary mouse by mounting the wireless transmitting unit of the wireless mouse to a computer. When the wireless transmitting unit of the wireless mouse is not mounted to a computer, but the first connector of the intermediary unit is connected to an electronic device, electric power of the battery of the wireless mouse can be transmitted to the electronic device for charging. In addition, if the two connectors of the intermediary unit of the wireless mouse are respectively connected to two electronic devices, the wireless mouse may serve as an intermediary for signal transmission, through which the two electronic devices transmit messages to each other.

In order to make the aforementioned features and advantages of the present invention more comprehensible, embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view of a wireless mouse according to an embodiment of the present invention.

FIG. 2 is a schematic view of a wireless transmitting unit of a wireless mouse plugged into an electronic device.

FIG. 3 is a schematic view of a charging system using the wireless mouse of FIG. 1.

FIG. 4 is a schematic view illustrating that two connectors of an intermediary unit of a wireless mouse are respectively connected to two electronic devices.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

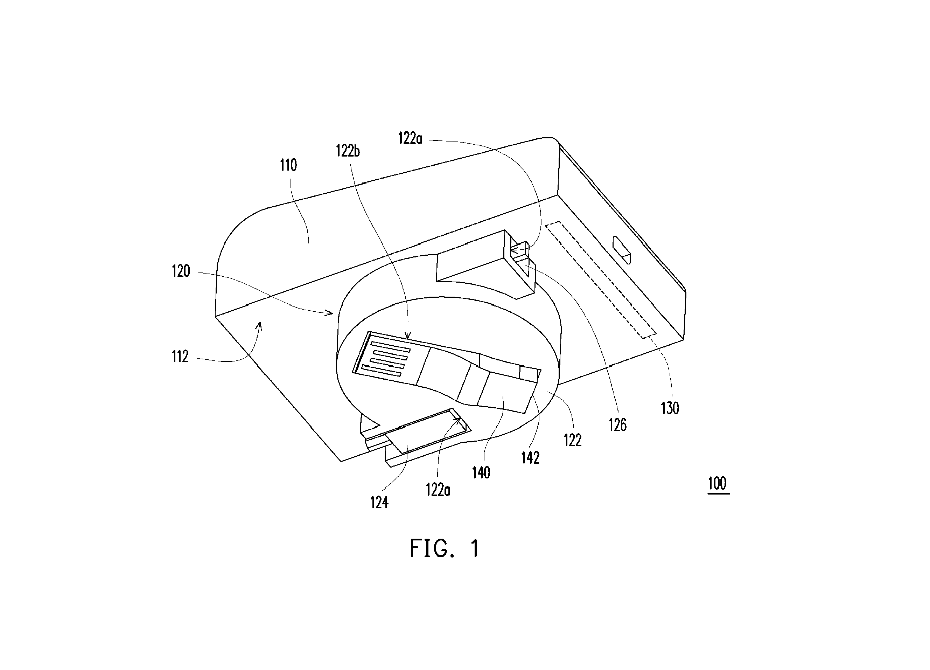

FIG. 1 is a schematic view of a wireless mouse according to an embodiment of the present invention. Referring to FIG. 1, the wireless mouse 100 of this embodiment is, for example, an optical mouse, which includes a main body 110, an intermediary unit 120, a battery 130 and a wireless transmitting unit 140. The main body 110 has a bottom surface 112, and the intermediary unit 120 is disposed on the bottom surface 112 of the main body 110. The intermediary unit 120 includes a frame 122, a first connector 124 and a second connector 126. The frame 122 is connected to the bottom surface 112 of the main body 110. The first connector 124 and the second connector 126 are accommodated in the frame 122, for which the reeling mechanism can be used, such as using a bobbin or a winding reel. The battery 130 is disposed in the main body 110 and electrically connected to the intermediary unit 120. The wireless transmitting unit 140 is disposed on one side of the intermediary unit 120 with the intermediary unit 120 located between the wireless transmitting unit 140 and the main body 110.

In detail, the frame 122 of the intermediary unit 120 further has two accommodating grooves 122a, and the first connector 124 and the second connector 126 are respectively accommodated in the accommodating grooves 122a. Moreover, the frame 122 further has a groove 122b disposed on a bottom surface (not shown) of the frame 122, and the wireless transmitting unit 140 is disposed in the groove 122b. It should be noted that, to facilitate a user to take the wireless transmitting unit 140 off the frame 122 of the intermediary unit 120, the depth of the groove 122b may be smaller than the thickness of the wireless transmitting unit 140; in other words, when the wireless transmitting unit 140 is accommodated in the groove 122b, the wireless transmitting unit 140 projects out of the groove 122b. In addition, one end of the wireless transmitting unit 140 is a third connector 142, and is used for being plugged into other electronic devices.

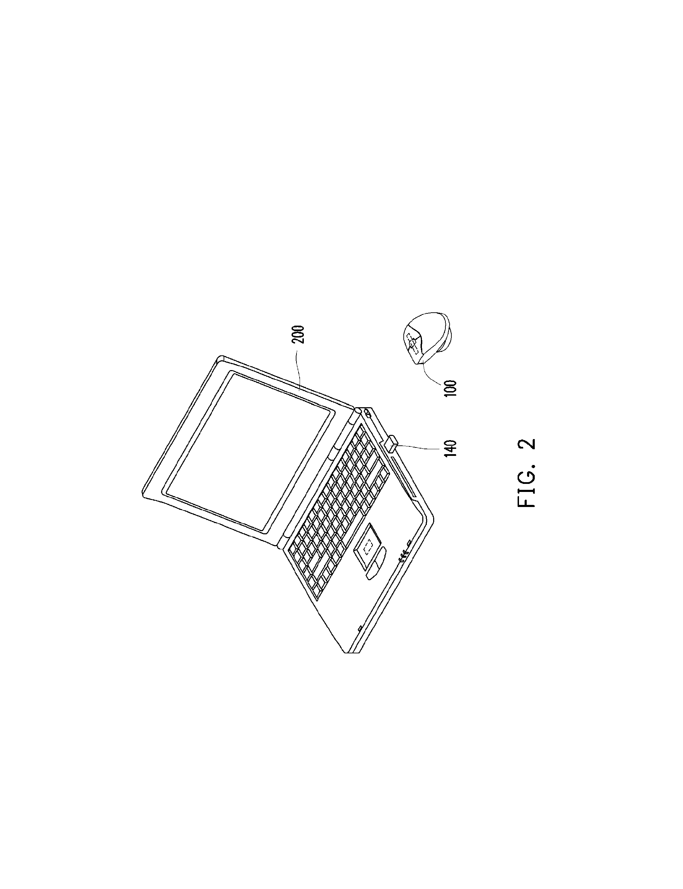

FIG. 2 is a schematic view of a wireless transmitting unit of a wireless mouse plugged into an electronic device. Referring to FIGs. 1 and 2, when the wireless transmitting unit 140 of the wireless mouse 100 of this embodiment is plugged into an electronic device such as a notebook computer 200, nothing protrudes from the bottom surface of the frame 122 of the intermediary unit 120 of the wireless mouse 100, so that the bottom surface of the frame 122 can smoothly slip on a desktop. When manipulating the wireless mouse 100, the user may see a corresponding pointer on a display screen of the notebook computer 200, or click a function key of the wireless mouse 100 to execute a program.

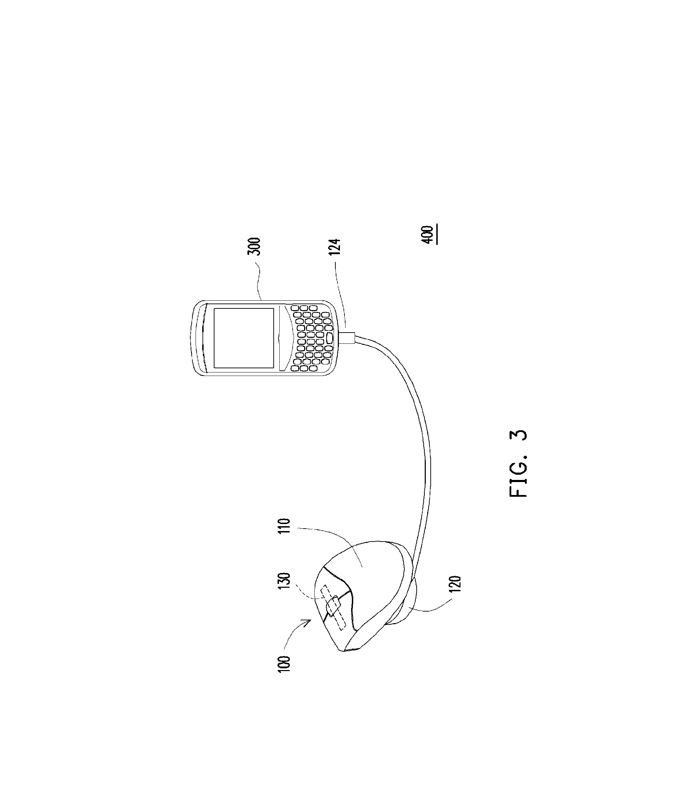

FIG. 3 is a schematic view of a charging system using the wireless mouse of FIG. 1. Referring to FIGs. 1 and 3, the wireless mouse 100 of this embodiment may be further connected to a hand-held electronic device 300 to serve as a power supply device of the hand-held electronic device 300, so as to form a charging system 400. In detail, the first connector 124 of the intermediary unit 120 of the wireless mouse 100 is connected to a hand-held electronic device, such as a mobile phone, tablet Personal Computer (PC) or a Personal Digital Assistant (PDA), and since the battery 130 is disposed in the main body 110 of the wireless mouse 100, electric power of the battery 130 may further be transmitted to the electronic device 300 through the intermediary unit 120. At this time, the wireless transmitting unit 140 is accommodated in the groove 122b of the frame 122 of the intermediary unit 120, and the wireless mouse 100 is only used for charging.

For the user, the hand-held electronic device 300 such as a mobile phone is carried for the convenience of communication, and thus has been an indispensable electronic device in daily life. If necessary, the user also needs to go out with the notebook computer 200 and possibly the wireless mouse 100 for the convenience of using the notebook computer 200. However, if no charger is carried for the notebook computer 200, and electric power of the hand-held electronic device 300 is (to be) exhausted, the user would rather decide not to use the wireless mouse 100, so as to save the electric power of the notebook computer 200 for continuous use of the notebook computer 200. In other words, the wireless mouse 100 of this embodiment may serve as a power supply device for supplying power to the hand-held electronic device 300, which not only can meet the requirement of the user for continuous use of the notebook computer 200, but also can address the urgent problem of exhaustion or imminent exhaustion of the electric power of the hand-held electronic device 300.

In addition, as charging stations for hand-held electronic devices have not been popularized in Taiwan, the hand-held electronic device 300 generally still needs to be charged through a large-sized electronic device such as a notebook computer. Therefore, if the user needs to go out but does not have time to charge the hand-held electronic device 300 of which the electric power is (to be) exhausted, the user may go out with the wireless mouse 100 of this embodiment and the hand-held electronic device 300, and use the wireless mouse 100 to supply the electric power of the battery 130 to the hand-held electronic device 300, which not only can reduce the weight of devices carried by the user going out, but also can enable the user to continue to use the hand-held electronic device 300 after charging. Furthermore, the battery 130 in the wireless mouse 100 is replaceable, so that when the electric power of the battery 130 is exhausted, the user may buy a new battery 130 nearby. Compared with the situation that the user needs to find a charging station for charging, the wireless mouse 100 of this embodiment has excellent portability and utility convenience.

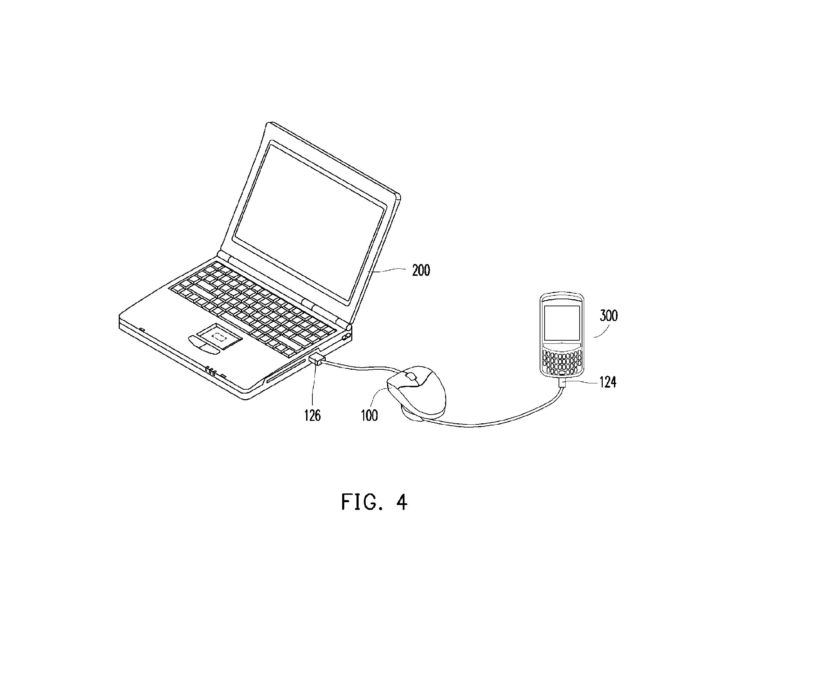

FIG. 4 is a schematic view illustrating that two connectors of an intermediary unit of a wireless mouse are respectively connected to two electronic devices. Referring to FIGs. 1 and 4, in this embodiment, the first connector 124 of the intermediary unit 120 of the wireless mouse 100 is connected to the hand-held electronic device 300, and the second connector 126 is connected to the notebook computer 200, and at this time, the wireless mouse 100 serves as a transmission intermediary, through which the notebook computer 200 and the hand-held electronic device 300 can exchange information with each other.

Based on the above, the wireless mouse of the present invention not only can function as an ordinary mouse, but also can be applied in a charging system as a power supply device, and thus has multi-purpose functions and utility convenience for users.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A wireless mouse, comprising:
a main body, comprising a bottom surface;
an intermediary unit, comprising:
a frame, connected to the bottom surface of the main body; and
a first connector and a second connector, accommodated in the frame;
a battery, disposed in the main body and electrically connected to the intermediary unit; and
a wireless transmitting unit, disposed on one side of the intermediary unit with the intermediary unit located between the wireless transmitting unit and the main body.

2. The wireless mouse according to claim 1, wherein the frame of the intermediary unit further comprises two accommodating grooves, and the first connector and the second connector are respectively accommodated in the accommodating grooves.

3. The wireless mouse according to claim 1, wherein one end of the wireless transmitting unit is a third connector.

4. A charging system, comprising:
an electronic device; and
a wireless mouse, electrically connected to the electronic device and comprising:
a main body, comprising a bottom surface;
an intermediary unit, comprising:
a frame, connected to the bottom surface of the main body; and
a first connector and a second connector, accommodated in the frame, wherein the first connector is connected to the electronic device;
a battery, disposed in the main body and electrically connected to the intermediary unit, wherein electric power of the battery is transmitted to the electronic device through the first connector; and
a wireless transmitting unit, disposed on one side of the intermediary unit with the intermediary unit located between the wireless transmitting unit and the main body.

5. The charging system according to claim 4, wherein the electronic device is a hand-held electronic device.

6. The charging system according to claim 4, wherein the frame of the intermediary unit further comprises two accommodating grooves, and the first connector and the second connector are respectively accommodated in the accommodating grooves.

7. The charging system according to claim 4, wherein one end of the wireless transmitting unit is a third connector.

8. The charging system according to claim 4, further comprising a second electronic device, wherein the second connector of the intermediary unit of the wireless mouse is electrically connected to the second electronic device.
